# EUROPÄISCHE PATENTSCHRIFT

(11) **EP 3 317 821 B1**
(45) Veröffentlichungstag und Bekanntmachung des Hinweises auf die Patenterteilung: **17.07.2019**
(21) Anmeldenummer: 16757822.8
(22) Anmeldetag: 22.06.2016
(51) Int. Cl.: G06K 19/077

(54) **SMARTCARD-ROHLING MIT MINDESTENS EINER SCHNITTSTELLE ZUR BERÜHRUNGSLOSEN ÜBERTRAGUNG VON INFORMATIONEN**
SMART CARD BLANK WITH AT LEAST ONE INTERFACE FOR CONTACTLESS TRANSMISSION OF INFORMATION
CARTE INTELLIGENTE VIERGE COMPRENANT AU MOINS UNE INTERFACE POUR LA TRANSMISSION SANS CONTACT D'INFORMATIONS

(30) Priorität: 23.06.2015 DE 102015007970; 23.06.2015 DE 202015004427 U
(43) Veröffentlichungstag der Anmeldung: 09.05.2018
(73) Patentinhaber: Linxens Holding, 78200 Mantes la Jolie (FR)
(72) Erfinder: KALCK, Sebastien, 75223 Nierfern (DE); MORGENTHALER, Frédéric, 75223 Nierfern (DE)
(74) Vertreter: Leitner, Waldemar
(86) Internationale Anmeldenummer: PCT/EP2016/001059
(87) Internationale Veröffentlichungsnummer: WO 2016/206801

(56) Entgegenhaltungen:
- EP-A2- 2 290 590
- DE-A1- 19 749 650
- US-A1- 2006 038 022

## Beschreibung

Die Erfindung betrifft einen Smartcard-Rohling mit mindestens einer Schnittstelle zur berührungslosen Übertragung von Informationen, der einen Trägerkörper mit einer Ausnehmung aufweist, in die ein elektronisches Bauteil wie ein Mikrochip einsetzbar ist, wobei im Trägerkörper eine Antenne vorgesehen ist, welche mit dem in die Ausnehmung eingesetzten elektronischen Bauteil elektrisch leitend verbunden ist, wobei die Antenne mindestens ein Anschlußelement zur Herstellung einer elektrisch leitenden Verbindung mit dem elektronischen Bauteil besitzt, welches in einer ersten Ebene im Trägerkörper des Smartcard-Rohlings angeordnet ist, die von einer durch das elektronische Bauteil festgelegten zweiten Ebene beabstandet ist, so dass zwischen dem elektronischen Bauteil und dem Anschlußelement eine Höhendifferenz gegeben ist, sowie eine diesen Smartcard-Rohling verweisende Smartcard und ein Verfahren zu seiner Herstellung.

Eine derartige Smartcard wird weitverbreitet verwendet. Sie besitzt einen oft Scheckkarten-großen Trägerkörper, der mit einer Ausnehmung versehen ist, in welche ein Mikrochip eingesetzt ist. Dieser Mikrochip weist zur Ausbildung einer ersten Schnittstelle ein berührungsgebundenes Kontaktelement auf oder ist mit einem derartigen Kontaktelement der Smartcard elektrisch leitend verbunden, so dass durch einen mechanischen Kontakt zwischen diesem Kontaktelement und einem korrespondierenden Kontaktelement eines mit der Smartcard zusammenwirkenden Peripheriegeräts ein elektrisch leitender Kontakt zwischen dem Mikrochip der Smartcard und z. B. einem Kartenleser des diese Smartcard verwendenden Peripheriegeräts, z. B. ein Terminal, ein Waren- oder Geldausgabeautomat oder dergleichen hergestellt wird und dieses Peripheriegerät auf die auf dem Mikrochip gespeicherten Daten, Informationen und/oder Programme, insbesondere Anwendungsprogramme, zugreifen kann.

Moderne Smartcards weisen des weiteren noch als eine zweite Schnittstelle eine elektrisch leitend mit dem Mikrochip verbundene Antenne auf, welche dazu dient, eine berührungslose Verbindung zwischen dem die Smartcard verwendenden Peripheriegerät und dem Mikrochip, etwa durch eine RFID- oder NFC-Technik, herzustellen.

Zu diesem Zweck muss der in der Ausnehmung des Kartenkörpers aufgenommene Mikrochip mit Anschlußelementen der Antenne verbunden werden. Die Antenne ist in der Regel, die den Mikrochip aufnehmende Ausnehmung umgebend, in einer ersten Ebene des Trägerkörpers angeordneten, die unter einer zweiten, durch den Mikrochip festgelegten Ebene liegt. Es ist daher eine die Höhendifferenz zwischen dem Mikrochip und den Anschlußelementen der Antenne gegeben, die durch eine elektrisch leitende Verbindung überbrückt werden muss.

Bis jetzt wird - wie z. B. aus der US 2006/0038022 A1 bekannt - eine derartige Verbindung derart ausgebildet, dass ein elektrisch leitender Kleber eingesetzt wird, um die Verbindung zwischen dem Mikrochip und den Anschlußelementen der Antenne herzustellen. Der Hersteller der fertigen Smartcard bezieht also einen Smartcard-Rohling, in den er dann den mit den entsprechenden Daten und/oder Programmen ausgerüsteten Mikrochip einsetzen muss. Zur Fertigstellung der Smartcard muss er daher nicht nur diesen Chip in die Ausnehmung des Kartenkörpers des Smartcard-Rohlings einsetzen und mit einem den Mikrochip tragenden Leiterrahmen, üblicherweise als Lead-frame bezeichnet, verbinden, sondern muss auch noch in einem weiteren Schritt vor oder gleichzeitig mit dem Einsetzen des Mikrochips in die Ausnehmung den elektrisch leitenden Kleber applizieren, um die vorstehend beschriebene elektrisch leitende Verbindung zwischen dem Mikrochip und der im Smartcard-Rohling vorgesehenen Antenne herzustellen.

Aus der DE 197 49 650 A1 ist eine Chipkarte und ein Verfahren zur Herstellung einer elektronischen Verbindung eines in eine Kavität eines Kartenkörpers der Chipkarte eingesetzten Moduls, welches eine elektronische Komponente aufweist, bekannt. Die Chipkarte weist einen Kartenkörper, eine aus diesem herausgearbeitete Kavität, einen Chip oder ein anderes elektronische Komponenten enthaltendes Modul mit Antennenanschlusskontakten auf, welche zur Verbindung mit einer Antenne oder einer Antennenschicht mit Antenneneinrichtungen im Kartenkörper dienen, wobei der Kartenkörper Kontakte zum Anschließen des Chips aufweist. Es ist vorgesehen, dass zwischen den Kontakten im Kartenkörper und den Antennenanschlusskontakten, diese leitend verbindend, ein Kontaktelement vorgesehen ist, welches die Kontakte und die Antennenanschlusskontakte elektrisch leitend verbinden. Es kann hierzu auch ein leitfähiger metallischer Bolzen angeordnet sein.

Aus der EP 2 290 590 A2 ist ein portabler Datenträger bekannt, der einen Datenträgerkörper mit einer elektronischen Komponente sowie ein elektronisches Modul besitzt. Dieses Ist zumindest teilweise in den Datenträgerkörper eingebettet und über eine Modulkontakteinrichtung des Moduls mittels eines elastischen, elektrisch leitfähigen Materials unter Druckbeaufschlagung elektrisch leitend mit einer Komponentenkontakteinrichtung der elektronischen Komponente des Datenträgers verbunden. Die Modulkontakteinrichtung ist räumlich strukturiert ausgebildet und in das elastische, elektrisch leitfähige Material durch die räumlich strukturierte Modulkontakteinrichtung ist eine räumliche Struktur eingeprägt.

Es ist daher Aufgabe der vorliegenden Erfindung, einen Smartcard-Rohling der eingangs genannten Art sowie ein Verfahren zu seiner Herstellung derart weiterzubilden, dass dessen Fertigstellung zu einer funktionsfähigen Smartcard vereinfacht ist.

Diese Aufgabe wird erfindungsgemäß dadurch gelöst, dass im Smartcard-Rohling mindestens ein Verbindungselement zur Herstellung einer elektrisch leitenden Verbindung mit dem Leiterrahmen vorgesehen ist, welches sich zwischen der vorgenannten ersten Ebene und der vorgenannten zweiten Ebene erstreckt, und wobei dieses mindestens eine Verbindungselement eine Höhe aufweist, die im Wesentlichen gleich der Höhendifferenz zwischen den beiden vorgenannten Ebenen ist, und dass das mindestens eine Verbindungselement Teil des Antennenanschlußrahmens ist.

Das erfindungsgemäße Verfahren sieht vor, dass durch ein in einen Trägerkörper des Smartcard-Rohlings angeordnetes Verbindungselement eine Höhendifferenz zwischen einer durch ein einem Anschlußelement einer Antenne festgelegten erster Ebene und einer durch das elektronische Bauteil festgelegten zweiten Ebene überbrückt wird.

Durch die erfindungsgemäßen Maßnahmen wird in vorgenannter Art und Weise ein Smartcard-Rohling für eine Smartcard sowie ein Verfahren zu seiner Herstellung geschaffen, welche sich dadurch auszeichnen, dass die Montage des in diesen Smartcard-Rohling einzusetzenden elektronischen Bauteils vereinfacht ist, da zur Verbindung dieses elektronischen Bauteils mit der im Trägerkörper der Smartcard-Rohlings angeordneten Antenne kein externes Verbindungsmittel wie ein elektrisch leitfähiger Kleber oder dergleichen eingesetzt werden muss. Da das erfindungsgemäß im Smartcard-Rohling vorgesehene Verbindungselement zur Überbrückung der Höhendifferenz zwischen der Antenne und dem elektronischen Bauteil besitzt den Vorteil, dass die Kontaktierung des in den Smartcard-Rohling eingesetzten elektronischen Bauteils, insbesondere eines Mikrochips, mit der Antenne besonders einfach durchzuführen ist.

Eine vorteilhafte Weiterbildung der Erfindung sieht vor, dass das erfindungsgemäße Verbindungselement als eine Zunge oder zungenartig ausgebildet ist und einen aus dem Grundkörper dieses Verbindungselement vorstehenden Bereich aufweist, dessen Höhe im Wesentlichen gleich der Höhendifferenz zwischen der ersten Ebene, die durch das oder die Anschlusselemente der Antenne festgelegt ist, und der zweiten Ebene, die durch das elektronische Bauteil festgelegt ist, beträgt. Der Vorsprung kann insbesondere durch ein entsprechendes Biegen und/oder Prägen des Verbindungselements oder durch Vorsehen einer wellenförmigen und/oder kugelförmigen Struktur ausgebildet wird. Eine derartige Maßnahme bewirkt, dass das erfindungsgemäße Verbindungselement besonders leicht und einfach herstellbar ist.

Die Erfindung sieht vor, dass das oder zumindest eines der Verbindungselemente Teil eines Antennenanschlussrahmens ist, der im erfindungsgemäßen Smartcard-Rohling vorgesehen ist. Hierdurch wird wiederum eine besonders einfache Herstellbarkeit ermöglicht.

Eine weitere vorteilhafte Weiterbildung der Erfindung sieht vor, dass der Anschlussrahmen und ein das elektronische Bauteil tragender Leiterrahmen miteinander verbunden sind. Diese Maßnahme hat den Vorteil, dass hierdurch der Antennenrahmen zusammen mit dem Leiterrahmen einfach in den Trägerkörper des Smartcard-Rohlings eingesetzt ist.

Eine weitere vorteilhafte Weiterbildung der Erfindung sieht vor, dass der Smartcard-Rohling eine weitere Schnittstelle aufweist, durch die eine berührungsgebundene Kontaktierung des elektronischen Bauteils ermöglicht ist. Eine derartige Maßnahme besitzt den Vorteil, dass hierdurch eine duale Kontaktierung des elektronischen Bauteils ausgebildet wird, sodass die den erfindungsgemäßen Smartcard-Rohling verwendende Smartcard sowohl berührungslos als auch berührungsgebunden mit einem diese Smartcard verwendende Peripheriegerät kommunizieren kann.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1: eine schematische Darstellung einer Smartcard,
- Figur 2: systematische Darstellung eines Ausführungsbeispiels eines Smart-card-Rohlings, wobei dessen Deckfläche durchsichtig gezeigt ist,
- Figur 3: eine vergrößerte Darstellung einer Ausnehmung des Trägerkörpers des Smartcard-Rohlings,
- Figur 4: eine vergrößerte Darstellung des Teilbereichs IV der Figur 3,
- Figur 5: einen Querschnitt (auszugsweise) durch das Ausführungsbeispiel,
- Figur 6: einen Ausschnitt aus dem Querschnitt der Figur 5,
- Figur 7: eine Darstellung eines Verbindungselements,
- Figuren 8-11: eine schematische Darstellung der Herstellung einer Trägerstruktur für ein elektronisches Bauteil aus einem Antennenanschlussrahmen und einen Leiterrahmen.

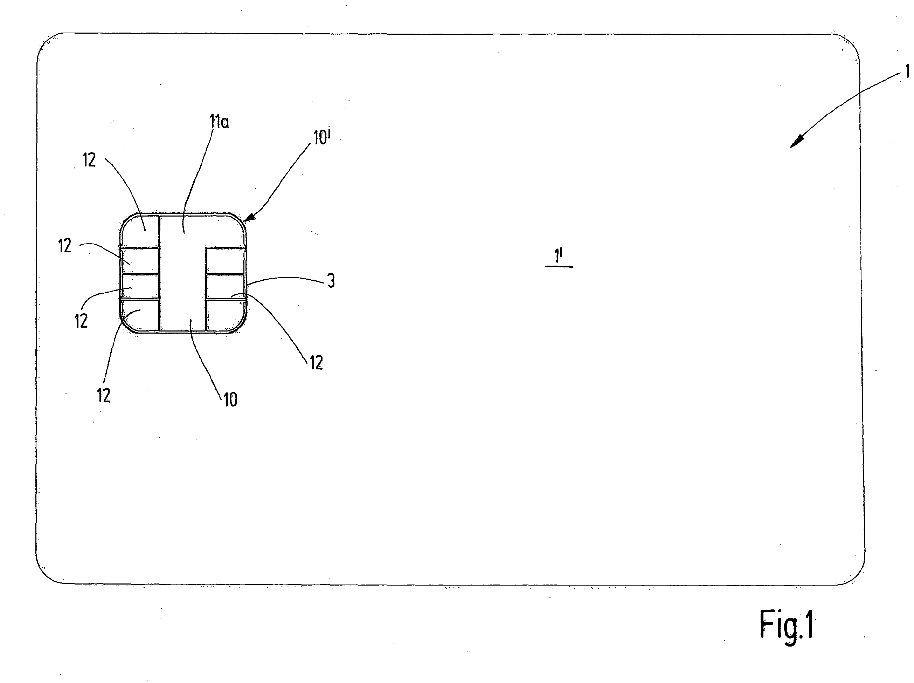

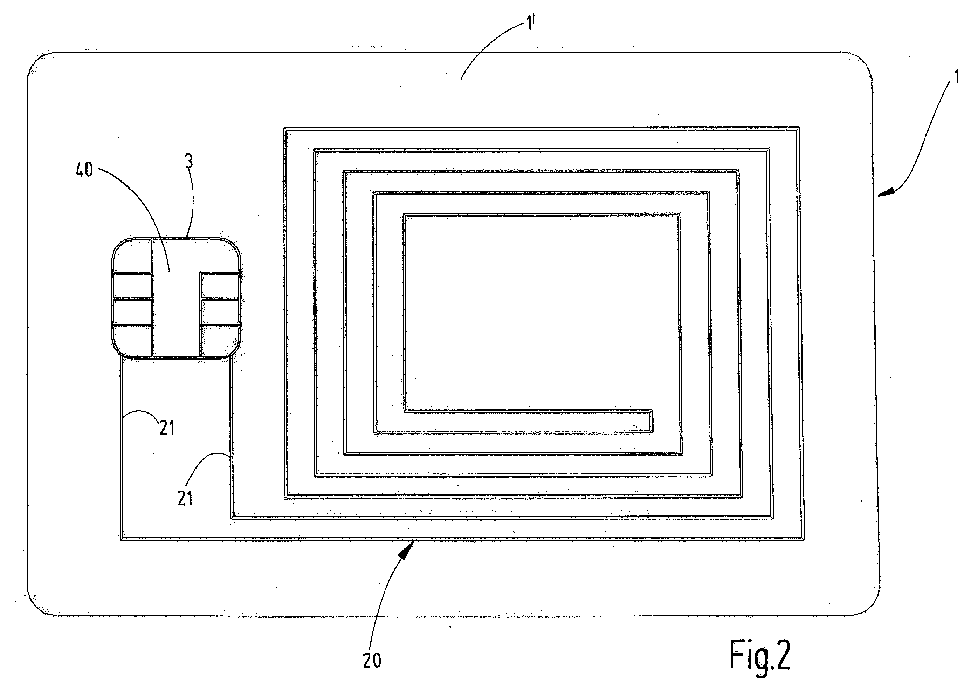

In Figur 1 ist ein Ausführungsbeispiel einer allgemein mit 1 bezeichneten Smartcard dargestellt. Die Smartcard 1 gliedert sich grundsätzlich in einen Smartcard-Rohling 1', der eine Ausnehmung 3 aufweist, in der in an und für sich bekannter und daher nicht mehr näher beschriebenen Art und Weise ein elektronisches Bauteil 10', wie z. B. einen Mikrochip 10, aufgenommen ist. Das elektronische Bauteil 10' wird von einem Leiterrahmen 40 (siehe dazu Figur 2) getragen, welcher elektrisch leitend mit diesem verbunden ist.

Der Smartcard-Rohling 1' weist in einer an und für sich ebenfalls bekannten und daher nicht mehr näher beschriebene Art und Weise einen Trägerkörper 2 auf, in dem die Ausnehmung 3 vorgesehen ist, in die das in der Figur 1 nur schematisch dargestellte elektronische Bauteil 10' wie z. B. der in dieser Figur dargestellte Mikrochip 10 eingesetzt ist. Dieser weist an seiner ersten Oberfläche 11a eine Anzahl von Kontaktelementen 12 auf. Diese dienen zur Herstellung einer elektrisch leitenden Verbindung zwischen einem die beschriebene Smartcard 1 verwendenden Peripheriegerät, wie z. B. einem Kartenleser oder einem Terminal oder einer Ausgabevorrichtung wie einem Verkaufsautomaten oder einem Geldausgabeautomaten, und dem Mikrochip 10 der Smartcard 1, die durch einen mechanischen Kontakt zwischen den Kontaktelementen 12 des Mikrochips 10 und korrespondierenden Kontaktelementen des Peripheriegeräts hergestellt wird. Über die Kontaktelemente 12 des Mikrochips 10 ist es somit diesem Peripheriegerät möglich, auf die im Mikrochip 10 gespeicherten Informationen wie Daten und/oder Programme zuzugreifen. Die Kontaktelemente 12 bilden somit eine erste, berührungsgebundene Schnittstelle für einen Informationsaustausch zwischen dem elektronischen Bauteil 10', hier also dem Mikrochip 10, und dem Peripheriegerät aus. Im Sinne einer prägnanteren Beschreibung soll unter dem Begriff "Informationen" sowohl Daten als auch Programme, insbesondere Anwendungsprogramme, die auf dem elektronischen Bauteil 10', insbesondere dem Mikrochip 10 implementiert oder gespeichert sind, verstanden werden. Des weiteren wird im folgenden anstelle von einem elektronischen Bauteil 10' von einem Mikrochip 10 gesprochen, wobei aber dieser Mikrochip 10 nur als Beispiel für ein elektronisches Bauteil 10' gemeint ist. Ein derartiger Aufbau einer Smartcard 1 sowie die Herstellung derselben aus einem Smartcard-Rohling 1 durch Einsetzen eines elektronischen Bauteils 10' in die Ausnehmung 3 und eine entsprechende Kontaktierung des elektronischen Bauteils 10' mit dem Leiterrahmen 40 ist bekannt und muss daher nicht mehr näher beschrieben werden.

Die Figur 2 zeigt nun den Smartcard-Rohling der Figur 1, wobei in der Darstellung der Figur 2 die Oberfläche des Smartcard-Rohlings 1' durchsichtig dargestellt ist, sodass dessen prinzipieller innerer Aufbau aus dieser Figur ersichtlich ist. Nicht gezeigt ist der in Figur 1 ersichtliche Mikrochip 10, so dass aus der Figur 2 der unter dem Mikrochip 10 angeordnete, diesen tragende Leiterrahmen 40 ersichtlich ist.

Um nun auch eine berührungslose Kontaktierung der Smartcard 1 zu ermöglichen, ist im Trägerkörper 2 des Smartcard-Rohlings 1' eine Antenne 20 angeordnet, die in einem elektrisch leitenden Kontakt mit dem in die Ausnehmung 3 eingesetzte Mikrochip 10 steht, so dass ein entsprechend ausgestattetes Peripheriegerät mit dem Mikrochip 10 durch eine berührungslose Übertragungstechnik, z. B. durch eine RFID-Technik oder eine NFC-Technik, über diese zweite Schnittstelle der Smartcard 1 auf den Mikrochip 10 zugreifen kann. Die Antenne 20 besitzt Antennendrähte 21, die zur Ausnehmung 3 hinführen und zumindest in einem Bereich unter dieser verlaufen. Auch ein derartiger Smartcard-Rohling 1 sowie eine diesen verwendende Smartcard 1 mit einer dualen Schnittstelle sind bekannt und müssen daher nicht mehr weiter im Detail beschrieben werden.

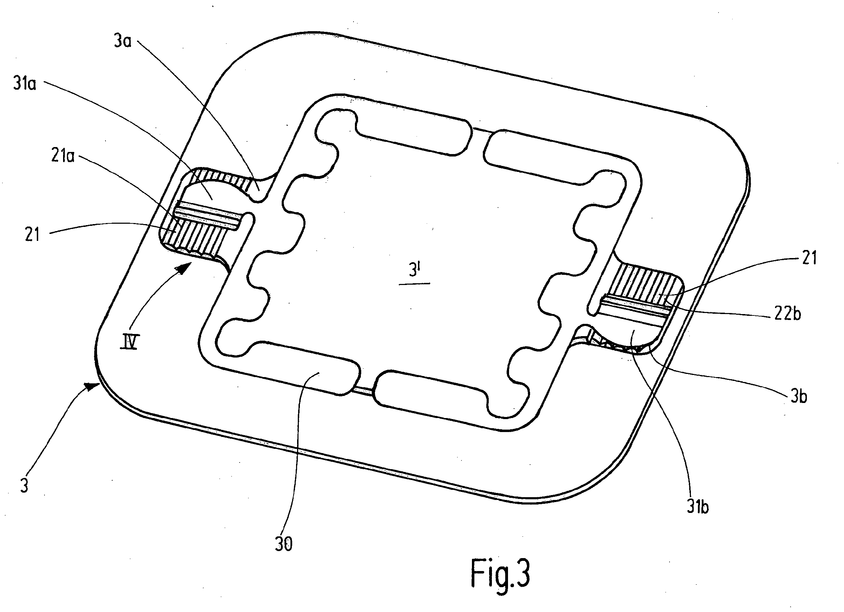

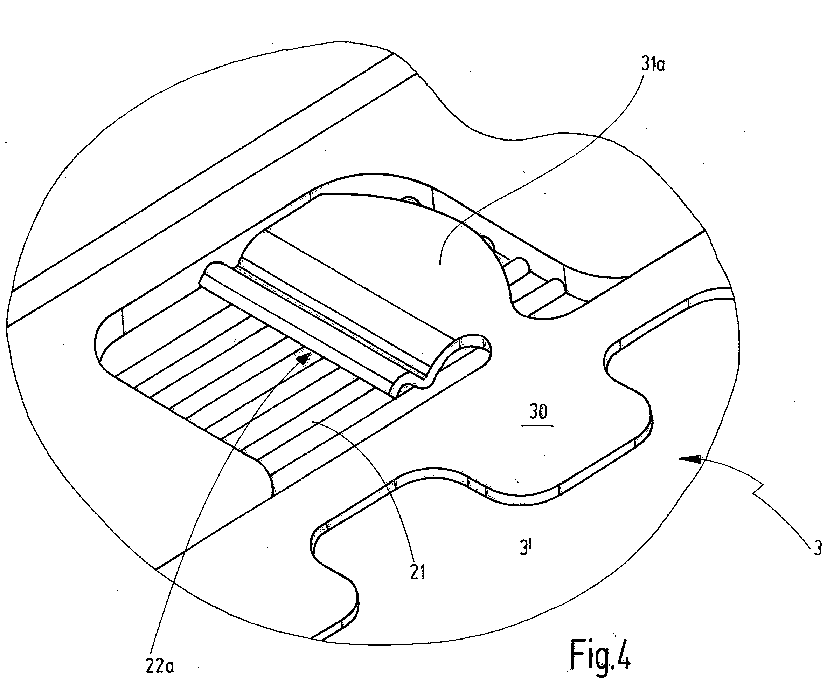

Die Figur 3 zeigt nun den Bereich der Ausnehmung 3 der Smartcard 1 der Figur 2 in einer vergrößerten Darstellung und die Figur 4 eine vergrößerte Darstellung des Bereichs II der Figur 3, jeweils aber ohne den in Figur 1 dargestellten Mikrochip 10 sowie den diesen tragenden, Leiterrahmen 40, wobei der übersichtlichen Darstellung halber die Antenne 20 außerhalb des Bereichs der Ausnehmung 3 ebenfalls nicht gezeigt ist. Man erkennt somit einen im montierten Zustand unter den Leiterrahmen 40 liegenden Antennenanschlussrahmen 30, welcher - wie nachstehend beschrieben - zur elektrischen Kontaktierung des Mikrochips 10, also allgemein des elektronischen Bauteils 10', mit der Antenne 20 dient. Ebenfalls erkennt man aus der Figur 3, dass ein Boden 3' der Ausnehmung 3 zwei Durchtrittsöffnungen 3a und 3b besitzt, unter denen Drähte 21 der Antenne 20 verlaufen. Dies ist insbesondere aus der Figur 4 ersichtlich. Die unter den Durchtrittsöffnungen 3a und 3b der Ausnehmung 3 des Trägerkörpers 2 liegenden Drähte 21 bilden Anschlußelemente 22a, 22b der Antenne 20 aus, über welche die Antenne 20 - wie nachstehend beschrieben - mit dem (später) in die Ausnehmung 3 eingesetzten Mikrochip 10 elektrisch leitend verbunden werden kann. Man erkennt des weiteren aus den Figuren 3 und 4, dass die Drähte 21 die Antenne 20 von den Verbindungselementen 31a, 31b des Antennenanschlußrahmens 30 beaufschlagt werden, welcher mit dem Mikrochip 10 in elektrisch leitendem Kontakt steht.

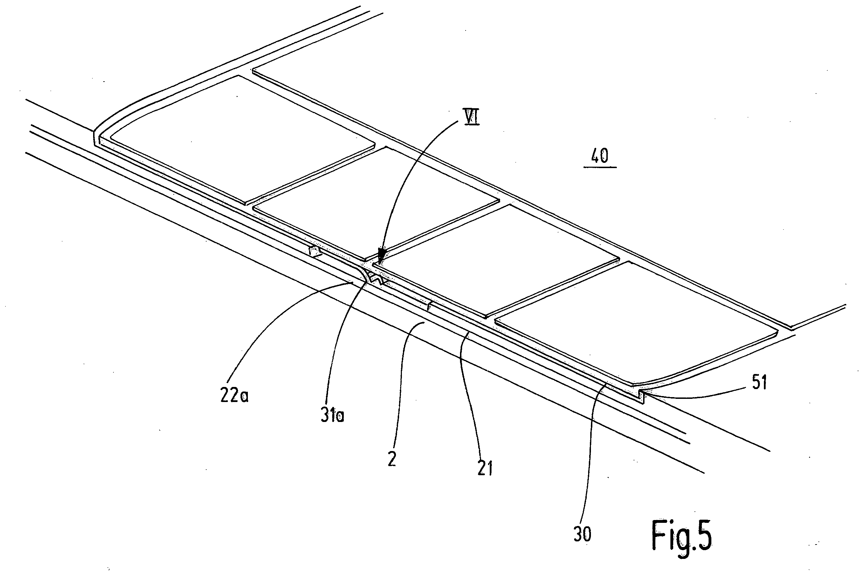

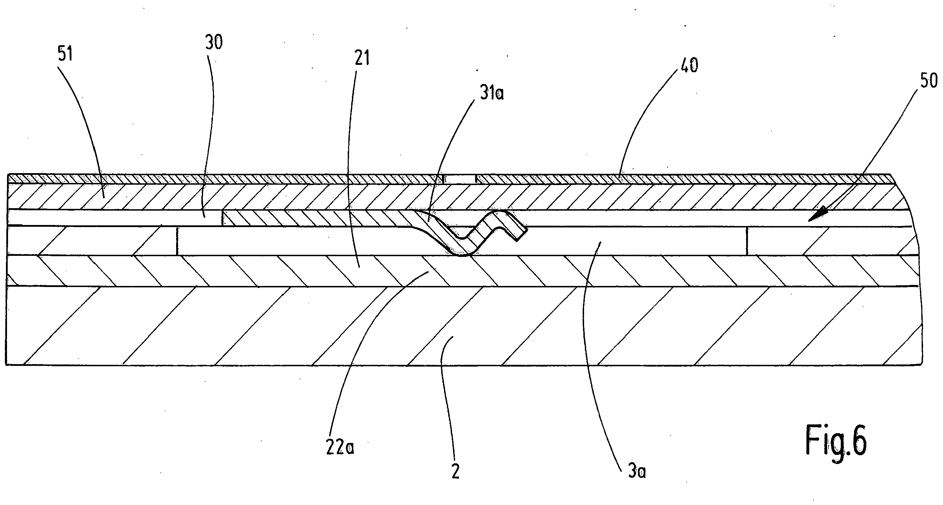

Die Figur 5 zeigt nun - auszugsweise - einen Querschnitt durch das Ausführungsbeispiel und die Figur 6 ist eine vergrößerte Darstellung des Bereichs VI der Figur 5. Man erkennt den Trägerkörper 2 des Smartcard-Rohlings 1 sowie den Antennenanschlußrahmen 30 und den Leiterrahmen 40. Ebenfalls ersichtlich sind die Drähte 21 der Antenne 20, die in einer ersten Ebene, einer "Antennenebene", des Trägerkörpers 2 angeordnet sind. Üblicherweise liegen alle Drähte 21 der Antenne 20 in dieser ersten Ebene. Dies ist aber nicht zwingend erforderlich. Ausreichend ist, dass der Bereich der Drähte 21, welche die Anschlußelemente 22a und 22b ausbilden, also unter den Öffnungen 3a und 3b der Ausnehmung 3 liegen, in dieser ersten Ebene liegen.

Insbesondere aus Figur 6 ist ersichtlich, dass diese erste Ebene von einer durch den Mikrochip 10 bzw. den diesen tragenden Leiterrahmen 40 festgelegten zweiten Ebene des Trägerkörpers 2 beabstandet angeordnet ist. Im hier beschriebenen Ausführungsbeispiel wird diese Höhendifferenz zwischen diesen beiden Ebenen durch die Verbindungselemente 31a und 31b des Antennenanschlußrahmens 30 überbrückt, so dass eine elektrisch leitende Verbindung zwischen dem Antennenanschlußrahmen 30, der elektrisch leitend mit dem Mikrochip 10 verbunden ist, und der Antenne 20 hergestellt ist. Hierdurch wird die dem berührungslosen Informationsaustausch dienende Schnittstelle der Smartcard 1 hergestellt. Der Antennenanschlußrahmen 30 ist also bereits im Smartcard-Rohling 1' angeordnet, so dass der diesen Smartcard-Rohling 1' zur Herstellung einer fertigen Smartcard 1 verwendende Smartcard-Hersteller lediglich das elektronische Bauteil 10', hier also den Mikrochip 10, in die Ausnehmung 3 einzusetzen und in bekannter Weise mit dem Leiterrahmen 40 elektrisch leitend verbinden muss, z. B. durch Bonden, um aus dem Smartcard-Rohling 1' und dem elektronischen Bauteil 10 eine funktionsfähige Smartcard 1 herzustellen. Das bisher übliche Applizieren eines leitfähigen Klebers beim Einsetzen eines Mikrochips 10 in einen Smartcard-Rohling 1' zur Herstellung einer elektrisch leitenden Verbindung zwischen diesem elektronischen Bauteil 10' und der Antenne 20 entfällt somit, wodurch die Herstellung einer Smartcard 1 deutlich vereinfacht wird.

Wie aus den Figuren ersichtlich ist, ist im hier beschriebenen Fall vorgesehen, dass die Verbindungselemente 31a und 31b als eine aus der Ebene des Antennenanschlußrahmens 30 hervorstehende Zungen 31 ausgebildet sind, die einen Vorsprung 33 besitzen, so dass durch diesen Vorsprung 33 die Höhendifferenz zwischen der durch die Antennenanschlußelemente 22a, 22b festgelegten ersten Ebene und der zweiten Ebene des Mikrochips 10 überbrückt ist und die Verbindungselemente 31a, 31b in elektrisch leitenden Kontakt mit den Anschlußelementen 22a, 22b treten können.

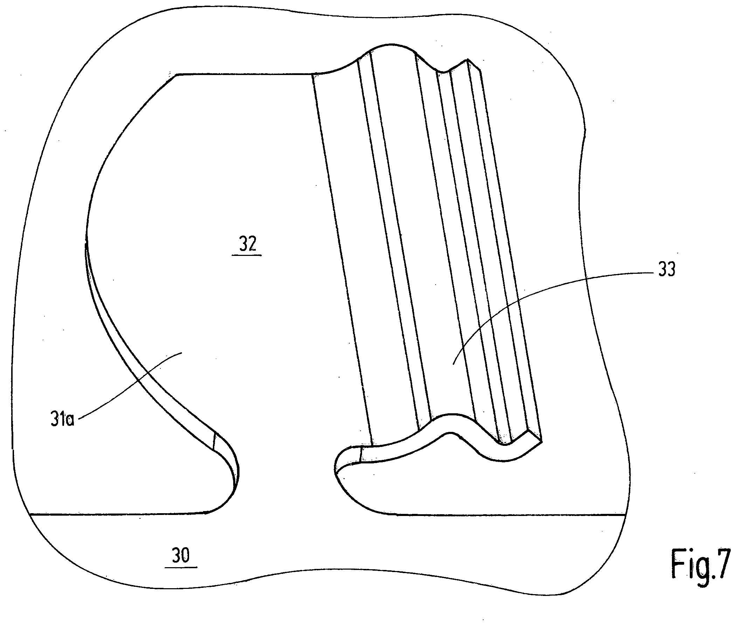

Bevorzugt wird, dass - wie am besten aus Figur 7 ersichtlich - die Verbindungselemente 31a und 31b jeweils einen Grundkörper 32 mit einem gebogenen, vorzugsweise höckerartigen Verlauf aufweisen, so dass der aus der Ebene des Antennenanschlußrahmens 30 hervortretender höckerartige Vorsprung 33 sich zu den Anschlußelementen 22a bis 22b der Antenne 20 hin erstreckt und mit diesen elektrisch leitend in Kontakt tritt. Eine derartige zungenartige Ausgestaltung ist aber nicht zwingend erforderlich. Auch eine wellen- und/oder kugelförmige Ausgestaltung der Verbindungselemente 31a, 31b ist möglich, genauso wie das Vorsehen einer Prägung. Grundsätzlich ist jede Ausgestaltung der Verbindungselemente 31a, 31b möglich, durch welche eine Überbrückung der Höhendifferenz zwischen der durch die Anschlußelemente 22a, 22b der Antenne 20, also die unter den Durchtrittsöffnungen 3a, 3b verlaufenden Drähte 21, festgelegten ersten Ebene und der durch den Leiterrahmen 40 festgelegten zweiten Ebene überbrückt wird. Bevorzugt wird jedoch die vorstehend beschriebene Ausgestaltung der Verbindungselemente 31a, 31b, wobei des weiteren bevorzugt wird, dass diese Verbindungselemente 31a, 31b federnd ausgebildet sind. Hierdurch können Fertigungstoleranzen einfach ausgeglichen werden.

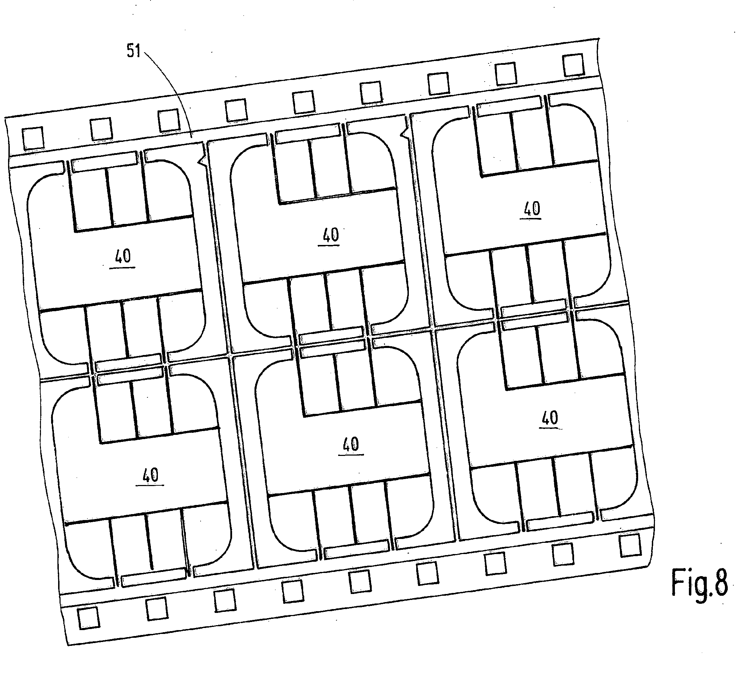

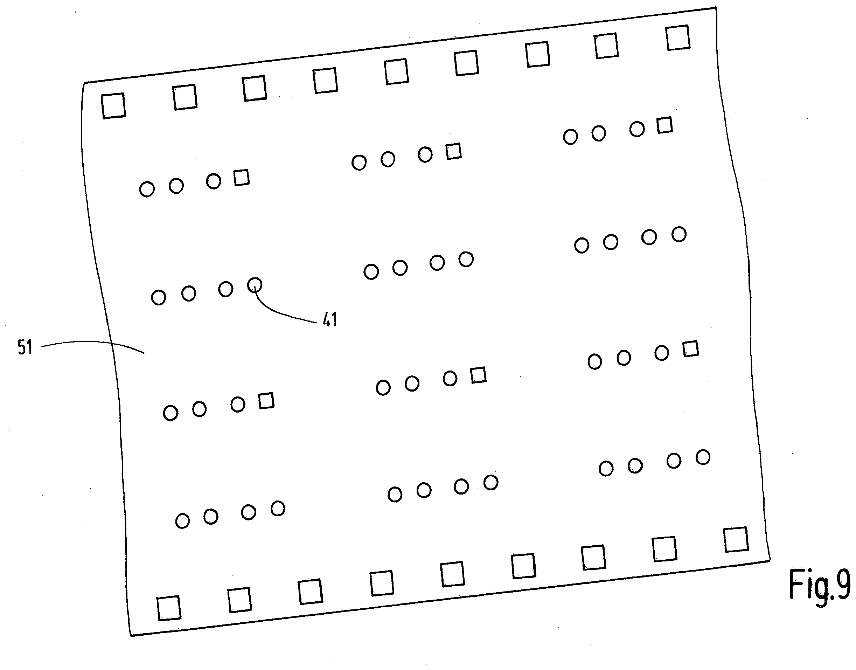

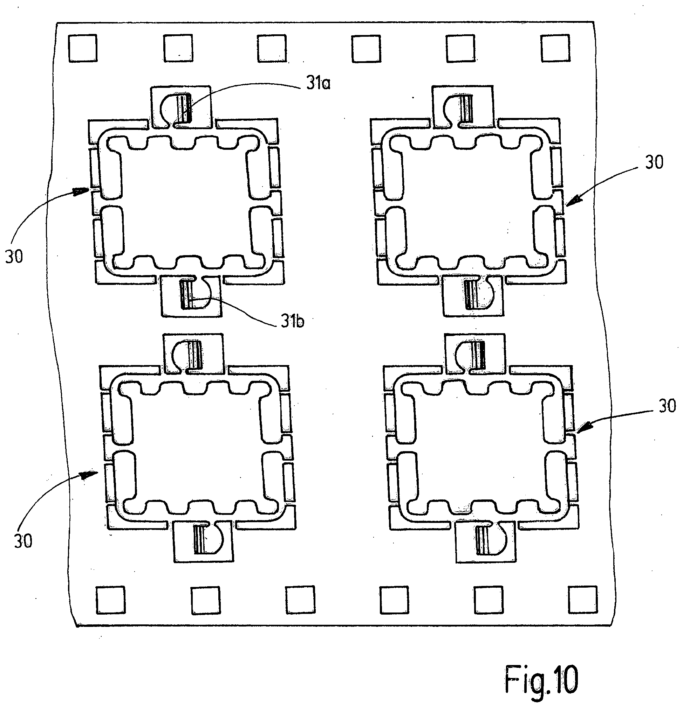

Die Figur 7 zeigt die Kontaktseite des Leiterrahmens 40, auf der Anschlussfelder 41 vorgesehen sind, die zur elektrisch leitenden Verbindung des Leiterrahmens 40 zu dem elektronischen Bauteil 10', also hier mit dem Mikrochip 10, dienen. Die Figur 8 zeigt die Rückseite des Leiterrahmens 40. Man erkennt Bondöffnungen 42. Die Figuren 9 und 10 zeigen nun einen Streifen mit mehreren Antennenanschlussrahmen 30. Man erkennt wiederum, dass jeder Antennenanschluss des Rahmens 30 zwei Verbindungselemente 31a, 31b besitzt, welche in Figur 10 in vergrößertem Maßstab dargestellt sind.

Die Figuren 8 bis 11 zeigen nun die Herstellung einer aus dem Antennenanschlußrahmen 30 und dem Leiterrahmen 40 bestehenden Trägerstruktur 50 für das elektronische Bauteil 10' wie dem Mikrochip 10. Hierzu werden Anschlußrahmen 40 ausgebildet, etwa durch eine Stanz-, eine Ätz- oder eine Laminiertechnik und auf eine Trägerfolie 51 aufgebracht (siehe Figur 8). Die Herstellung derartiger Leiterrahmen 40 ist bekannt und muss daher nicht mehr näher beschrieben werden.

Die Figur 9 zeigt nun die Rückseite der Trägerfolie 51, auf der die Anschlussrahmen 40 angeordnet sind. Man erkennt hier Bondöffnungen 41 des Leiterrahmens 40.

Der Antennenanschlußrahmen 30 in ebenfalls bekannter Art und Weise durch Stanzen, Ätzen, etc. aus einem flachen Grundmaterial ausgebildet. Man erkennt aus Figur 10 vier Antennenanschlußrahmen 30 mit jeweils zwei Verbindungselementen 31a, 31b.

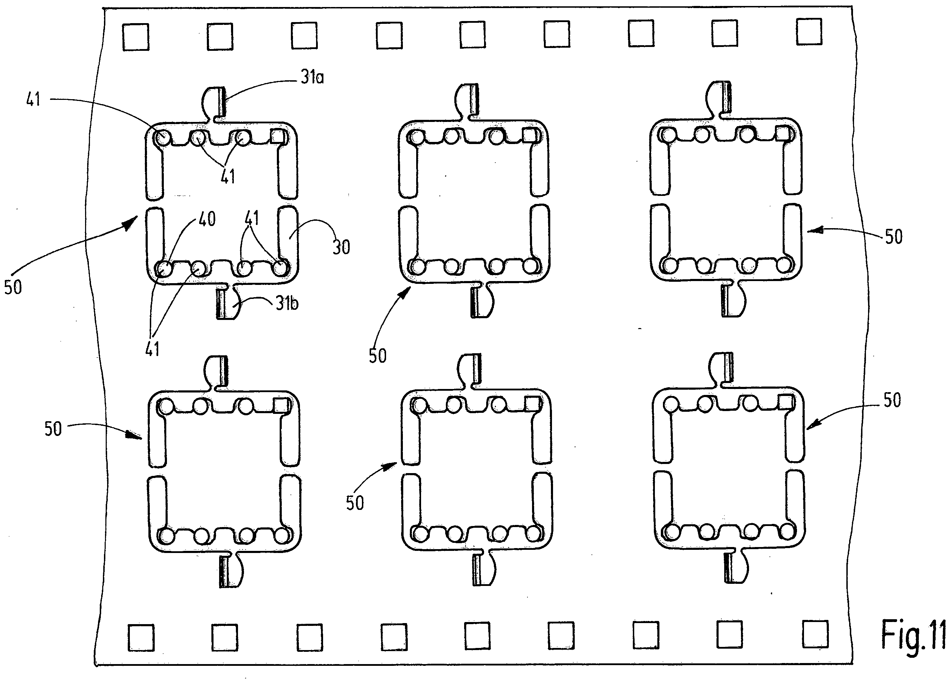

Wie aus der Figur 11 ersichtlich, werden dann der Antennenanschlußrahmen 30 und der Leiterrahmen 40 miteinander verbunden, z. B. durch eine entsprechende Verklebung. Die derartig gebildete Trägerstruktur 50 wird dann - vergleichbar mit dem Einsetzen eines konventionellen Leiterrahmens - in den Trägerkörper 2 der Smartcard 1 eingesetzt.

Vorzugsweise ist der Antennenanschlußrahmen 30 derart ausgebildet, dass er beim Umhüllen ("potting") der Trägerstruktur 50 und des von ihr aufgenommenen elektronischen Bauteils 10' mit einem entsprechenden Harz oder einem ähnlichen Mittel, also einer Potting-Masse, den Verlauf dieser Potting-Masse begrenzt. Dies vereinfacht in vorteilhafter Art und Weise die Herstellung eines den beschriebenen Smartcard-Rohling verwendenden elektronischen Bauteils 10'.

Ein weiterer Vorteil der beschriebenen Maßnahmen ist, dass es nicht mehr zwingend erforderlich ist, Ringe, insbesondere Kupferringe, um die Bondöffnungen 42 vorzusehen. Dem Auftreten eines Kurzschlusses zwischen in die Bondöffnungen 42 eingeführten Bonddrähten und dem elektronischen Bauteil 10' wird hierdurch entgegengewirkt.

Bei der bevorstehenden Beschreibung wird davon ausgegangen, dass der Smartcard-Rohling 1' und somit die aus ihm ausgebildete Smartcard 1 zwei Schnittstellen für einen Informationsaustausch zwischen der Smartcard 1 und dem diese verwendende Peripheriegerät besitzt, nämlich eine erste Schnittstelle für eine berührungsgebundene Verbindung und eine zweite Schnittstelle für eine berührungslose Verbindung. Dem Fachmann ist ersichtlich, dass hierdurch eine Smartcard mit einer dualen Schnittstellenanordnung ausgebildet wird. Dies ist aber nicht zwingend erforderlich. Für bestimmte Anwendungszwecke kann es durchaus ausreichend sein, dass die Smartcard 1 nur eine Schnittstelle für eine berührungslose Verbindung besitzt. In diesem Fall kann dann die erste Schnittstelle, nämlich die berührungsgebundene Schnittstelle, entfallen.

Zusammenfassend ist festzuhalten, dass durch die beschriebenen Maßnahmen ein Smartcard-Rohling 1' sowie ein Verfahren zu seiner Herstellung ausgebildet werden, welche die Herstellung einer Smartcard 1 mit zumindest einer berührungslosen Schnittstelle deutlich vereinfachen, da durch die im Trägerkörper 2 des Smartcard-Rohlings 1' vorgesehenen Verbindungselemente 31a, 31b, die vorzugsweise als Bestandteile eines Antennenanschlußrahmens 30 ausgebildet sind, eine direkte Kontaktierung zwischen dem in die Ausnehmung 3' des Trägerkörpers 2 eingesetzten elektronischen Bauteil 10', insbesondere einem Mikrochip 10, und dem beabstandet zu diesem elektronischen Bauteil 10' angeordneten Anschlußelementen 22a, 22b der Antenne 20 ermöglicht wird, in dem durch das oder die Verbindungselemente 31a, 31b die zwischen diesen beiden Ebenen gegebene Höhendifferenz überbrückt wird.

## Patentansprüche

1. Smartcard-Rohling mit mindestens einer Schnittstelle zur berührungslosen Übertragung von Informationen, der einen Trägerkörper (2) mit einer Ausnehmung (3) aufweist, in die ein elektronisches Bauteil (10') wie ein Mikrochip (10) einsetzbar ist, wobei der Smartcard-Rohling (1) einen Leiterrahmen (40) besitzt, durch den das in die Ausnehmung (3) des Trägerkörpers (2) einzusetzende elektronische Bauteil (10') elektrisch kontaktierbar ist, wobei im Trägerkörper (2) eine Antenne (20) vorgesehen ist, welche mit dem in die Ausnehmung (3) eingesetzten elektronischen Bauteil elektrisch leitend verbunden ist, wobei die Antenne (20) einen Antennenanschlußrahmen mit mindestens einem Anschlußelement (22a, 22b) zur Herstellung einer elektrisch leitenden Verbindung mit dem elektronischen Bauteil (10') besitzt, wobei das Anschlußelement (22a, 22b) in einer ersten Ebene im Trägerkörper (2) des Smartcard-Rohlings (1') angeordnet ist, welche von einer durch den das elektronische Bauteil (10') tragenden Leiterrahmen (40) festgelegten zweiten Ebene beabstandet ist, so dass zwischen diesen beiden Ebenen eine Höhendifferenz gegeben ist, **dadurch gekennzeichnet, dass** im Smartcard-Rohling (1) mindestens ein Verbindungselement (31a; 31b) zur Herstellung einer elektrisch leitenden Verbindung mit dem Leiterrahmen (40) vorgesehen ist, welches sich zwischen der vorgenannten ersten Ebene und der vorgenannten zweiten Ebene erstreckt, und wobei dieses mindestens eine Verbindungselement (31a; 31b) eine Höhe aufweist, die im Wesentlichen gleich der Höhendifferenz zwischen den beiden vorgenannten Ebenen ist, und dass das mindestens eine Verbindungselement (31a; 31b) Teil des Antennenanschlußrahmens (30) ist.

2. Smartcard-Rohling nach Anspruch 1, **dadurch gekennzeichnet, dass** mindestens ein Verbindungselement (31a, 31b) als eine Zunge oder zungenartig ausgebildet ist und einen Vorsprung (33) besitzt.

3. Smartcard-Rohling nach einem der vorangehenden Ansprüche, **dadurch gekennzeichnet, dass** mindestens ein Verbindungselement (31a, 31b) wellen- und/oder kugelförmig oder als Prägung ausgestaltet ist.

4. Smartcard-Rohling nach einem der vorangehenden Ansprüche, **dadurch gekennzeichnet, dass** die Ausnehmung (3) des Trägerkörpers (2) mindestens eine Durchtrittsöffnung (3a; 3b) für ein Verbindungselement (31a; 31b) besitzt.

5. Smartcard-Rohling nach einem der vorangehenden Ansprüche, **dadurch gekennzeichnet, dass** der Leiterrahmen (40) und der Antennenanschlußrahmen (30) miteinander zu einer Trägerstruktur verbunden sind.

6. Smartcard-Rohling nach einem der vorangehenden Ansprüche, **dadurch gekennzeichnet, dass** der Smartcard-Rohling (1) mindestens ein berührungsgebundenes Kontaktelement (21) aufweist,

7. Smartcard, die einen Smartcard-Rohling (1) sowie ein in dessen Ausnehmung (3) einzusetzendes elektronisches Bauteil (10') aufweist, **dadurch gekennzeichnet, dass** der Smartcard-Rohling (1) nach einem der Ansprüche 1 bis 6 ausgebildet ist.

8. Verfahren zur Herstellung eines Smartcard-Rohlings (1') gemäß einem der Ansprüche 1 bis 6, **dadurch gekennzeichnet, dass** durch ein in einen Trägerkörper (2) des Smartcard-Rohlings (1') angeordnetes Verbindungselement (31a; 31b) eine Höhendifferenz zwischen einer durch ein das oder die Anschlußelemente (22a; 22b) einer Antenne (20) festgelegten ersten Ebene und einer durch einen das elektronische Bauteil (10') tragenden Leiterrahmen (40) festgelegten zweiten Ebene überbrückt wird.

9. Verfahren zur Herstellung einer Smartcard (1) aus einem Smartcard-Rohling (1') und einem elektronischen Bauteil (10'), wobei der Smartcard-Rohling (1') eine Ausnehmung (3) aufweist, in welche das elektronische Bauteil (10') einsetzbar ist, **dadurch gekennzeichnet, dass** zur Herstellung der Smartcard (1) ein Smartcard-Rohling (1') nach einem der Ansprüche 1 bis 6 verwendet wird.

## Claims

1. Smart card blank having at least one interface for a contactless transmission of information, having a support body (2) with a recess (3), in which an electronic component (10') like a microchip (10) can be inserted, whereby the smart card blank (1) comprises a lead frame (40), by which the electronic component (10') to be received in the recess (3) of the support body (2) can be electrically contacted, whereby in the support body (2) an antenna (20) is provided, which is electrically connected with the electronic component being received in the recess (3), whereby the antenna (20) comprises an antenna frame having at least one connecting element (22a, 22b) for establishing an electrically conductive connection with said electronic component (10'), whereby the connecting element (22a, 22b) is arranged in a first plane of the support body (2) of the smart card blank (1'), which is spaced distant from a second plane being defined by the lead frame (40) carrying the electronic component (10'), so that between these two planes a difference in heights is given, **characterized in that** in the smart card blank (1) at least one connector element (31a; 31b) is provided for establishing an electrically conductive connection with the lead frame, which extends between said first plane and said second plane being defined by the electronic component, and whereby at least one connector element (31a; 31b) has got a heights which essentially corresponds to the difference in heights between the aforementioned planes and that said at least one connector element (31a; 31b) is part of the antenna frame (30), and that the at least one connector element (31a; 31b) is part of the antenna frame (30).

2. Smart card blank according to one of the claims 1 or 2, **characterized in that** at least one connector element (31a, 31b) is formed as a tongue or tonguelike and has got a protrusion (33).

3. Smart card blank according to one of the previous claims, **characterized in that** at least one connector element (31a; 31b) is formed wave-shaped and/or sphere-like or as embossing.

4. Smart card blank according to one of the previous claims, **characterized in that** the recess (3) of the support body (2) comprises at least one through opening (3a; 3b) for said connector element (31a; 31b).

5. Smart card blank according to one of the previous claims, **characterized in that** the lead frame (40) and the antenna frame (30) are joined to a support structure.

6. Smart card blank according to one of the previous claims, **characterized in that** the smart card blank (1) has got at least one contact-bound contact element (21).

7. Smart card, having a smart card blank (1) as well as an electronic component (10'), which can be inserted in a recess (3) thereof, **characterized in that** the smart card blank (1) according to one of the claims 1 to 6 is used.

8. Method for the manufacturing of a smart card blank (1'), **characterized in that** by means of a connector element (31a; 31b) being provided in a support body (2) of the smart card blank (1') a difference in heights between a first plane being defined by the or one of the connecting elements (22a; 22b) of an antenna (20) and a second plane being defined by the lead frame (40) carrying said electronic component (10') is bridged.

9. Method for the production of a smart card (1) from a smart card blank (1') and an electronic component (10'), whereby the smart card blank (1') has got a recess (3), in which said electronic component (10') can be inserted, **characterized in that** for the manufacturing of the smart card (1) a smart card blank (1') according to one of the claims 1 to 6 is used.

## Revendications

1. Carte intelligente vierge avec au moins une interface pour la transmission sans contact d'informations, qui comprend un corps porteur (2) avec un évidement (3) dans lequel un composant électronique (10'), tel qu'une micropuce (10), peut être inséré, dans laquelle la carte intelligente vierge (1) possède un cadre conducteur (40) par lequel le composant électronique (10') à insérer dans l'évidement (3) du corps porteur (2) peut être mis en contact électriquement, dans laquelle il est prévu dans le corps porteur (2) une antenne (20) qui est reliée d'une manière électroconductrice au composant électronique inséré dans l'évidement (3), dans laquelle l'antenne (20) possède un cadre de branchement d'antenne avec au moins un élément de branchement (22a, 22b) pour réaliser une liaison électroconductrice avec le composant électronique (10'), dans laquelle l'élément de branchement (22a, 22b) est disposé dans un premier plan dans le corps porteur (2) de la carte intelligente vierge (1'), lequel plan est espacé d'un second plan déterminé par le cadre conducteur (40) portant le composant électronique (10') de sorte qu'il existe une différence de hauteur entre ces deux plans, **caractérisée en ce qu'**il est prévu, dans la carte intelligente vierge (1), au moins un élément de liaison (31a ; 31b) pour la réalisation d'une liaison électroconductrice avec le cadre conducteur (40), lequel élément s'étend entre le premier plan susmentionné et le second plan susmentionné, et dans laquelle cet au moins un élément de liaison (31a ; 31b) présente une hauteur qui est sensiblement égale à la différence de hauteur entre les deux plans susmentionnés, et **en ce que** l'au moins un élément de liaison (31a ; 31b) fait partie du cadre de branchement d'antenne (30).

2. Carte intelligente vierge selon la revendication 1, **caractérisée en ce qu'**au moins un élément de liaison (31a, 31b) est conçu en tant que languette ou sous forme de languette et possède une protubérance (33).

3. Carte intelligente vierge selon l'une quelconque des revendications précédentes, **caractérisée en ce qu'**au moins un élément de liaison (31a, 31b) est agencé avec une forme ondulée et/ou sphérique ou en tant qu'embossage.

4. Carte intelligente vierge selon l'une quelconque des revendications précédentes, **caractérisée en ce que** l'évidement (3) du corps porteur (2) possède au moins une ouverture de passage (3a ; 3b) pour un élément de liaison (31a ; 31b).

5. Carte intelligente vierge selon l'une quelconque des revendications précédentes, **caractérisée en ce que** le cadre conducteur (40) et le cadre de branchement d'antenne (30) sont reliés entre eux en une structure porteuse.

6. Carte intelligente vierge selon l'une quelconque des revendications précédentes, **caractérisée en ce que** la carte intelligente vierge (1) comprend au moins un élément de contact lié par contact (21).

7. Carte intelligente, qui comprend une carte intelligente vierge (1) ainsi qu'un composant électronique (10') à insérer dans son évidement (3), **caractérisée en ce que** la carte intelligente vierge (1) est conçue selon l'une quelconque des revendications 1 à 6.

8. Procédé de fabrication d'une carte intelligente vierge (1') selon l'une quelconque des revendications 1 à 6, **caractérisé en ce qu'**une différence de hauteur entre un premier plan déterminé par le ou les éléments de branchement (22a ; 22b) d'une antenne (20) et un second plan déterminé par un cadre conducteur (40) portant le composant électronique (10') est comblée par un élément de liaison (31a ; 31b) disposé dans un corps porteur (2) de la carte intelligente vierge (1').

9. Procédé de fabrication d'une carte intelligente (1) à partir d'une carte intelligente vierge (1') et d'un composant électronique (10'), dans lequel la carte intelligente vierge (1') comprend un évidement (3) dans lequel le composant électronique (10') peut être inséré, **caractérisé en ce qu'**une carte intelligente vierge (1') selon l'une quelconque des revendications 1 à 6 est employée pour la fabrication de la carte intelligente (1).
